(19) Europäisches Patentamt
European Patent Office
Office européen des brevets

(11) **EP 0 616 932 B1**

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(51) Int. Cl.$^6$: **B60T 13/72**

(21) Anmeldenummer: **94104009.9**

(22) Anmeldetag: **15.03.1994**

(54) **Bremskraftverstärkersystem zum Regeln eines Bremsdruckes mit einem Bremskraftverstärker**

Servo brake booster system for control of a brake pressure with a brake booster

Système d'assistance au freinage pour régler la pression de freinage au moyen d'un servomoteur

(84) Benannte Vertragsstaaten:
**DE ES FR GB IT**

(30) Priorität: **26.03.1993 DE 4309850**

(43) Veröffentlichungstag der Anmeldung:
**28.09.1994 Patentblatt 1994/39**

(73) Patentinhaber: **LUCAS INDUSTRIES PUBLIC LIMITED COMPANY**
**Solihull, West Midlands B91 3TX (GB)**

(72) Erfinder: **Heibel, Helmut**
**D-56424 Moschheim (DE)**

(74) Vertreter: **Schmidt, Steffen J., Dipl.-Ing.**
**Wuesthoff & Wuesthoff,**
**Patent- und Rechtsanwälte,**
**Schweigerstrasse 2**
**81541 München (DE)**

(56) Entgegenhaltungen:
WO-A-93/24353          DE-A- 4 034 847
GB-A- 2 127 505          US-A- 4 057 301

## Beschreibung

Die Erfindung betrifft ein Bremskraftverstärkersystem zum Regeln des Bremsdruckes in einer mit einem elektronisch steuerbaren Bremskraftverstärker ausgerüsteten Fahrzeugbremsanlage.

Aus der DE 39 43 002 A1 ist eine Fahrzeugbremsanlage mit einem Bremskraftverstärker bekannt, bei dem zusätzlich zum üblichen mechanischen Betätigungsventil des Bremskraftverstärkers ein weiteres, elektrisch gesteuertes Ventil vorgesehen ist, um in Abhängigkeit von mittels einer Datenverarbeitungsanlage erzeugten Steuersignalen eine Einstellung des Bremskraftverstärkers (und damit der Bremskraft) vorzunehmen. Auch das DE-GM 92 02 154 beschreibt einen elektronisch einstellbaren Bremskraftverstärker.

In der DE 33 25 714 ist eine Vorrichtung zum Abbremsen von Kraftfahrzeugen beschrieben, bei der das abzubremsende Fahrzeug mit einem Abstandswarnradarsystem ausgestattet ist. Hier wird dem Fahrer bei Unterschreiten eines vorher festgelegten Sicherheitsabstandes eine Warnung übermittelt. Wird daraufhin das Bremspedal betätigt, werden die Schwellwerte von Weg und Pedaldruck erfaßt und daraufhin eine Speicherbremse aktiviert, welche die Bremsung entsprechend dem Abstand und den Schwellwerten unterstützt.

Aus der DE 40 28 290 C1 ist ein Verfahren zur Verkürzung des Bremsweges in kritischen Fahrsituationen beschrieben, bei dem das Überschreiten eines ersten Schwellwertes der Betätigungsgeschwindigkeit des Bremspedals als einziges Kriterium einen automatischen Bremsvorgang auslöst, bei dem der auf die Bremsen ausgeübte Bremsdruck dem situationsoptimalen Bremsdruck entspricht.

Aus dem Stand der Technik sind Einrichtungen bekannt, bei denen Bremskraftverstärker, z.B. mit einer Druckdifferenz arbeitende Bremskraftverstärker, über ein zusätzliches elektromagnetisch betätigbares Steuerventil so steuerbar sind, daß eine Bremskraftverstärkung durchgeführt wird, die sich von der rein mechanisch eingestellten Bremskraftverstärkung unterscheidet, und zwar entsprechend den elektronischen Steuerbefehlen für das elektromagnetisch betätigbare Steuerventil des Bremskraftverstärkers.

Untersuchungen des Verhaltens von Fahrern von mit ABS ausgestatteten Fahrzeugen haben ergeben, daß in kritischen Fahrsituationen (insbesondere sogenannten Panikbremsungen) häufig ein unbewußtes Fehlverhalten auftritt. Sehr häufig wird in der Anfangsphase einer Bremsung das Bremspedal zwar ausreichend schnell betätigt, jedoch scheuen sich viele Fahrer, das Pedal mit der maximal möglichen Kraft durchzudrücken. Ein derartiges, nicht optimales Bremsverhalten tritt bei einer Vielzahl von Autofahrern aus folgenden Gründen auf:
In der Anfangsphase einer Bremsung ist die dem Bremspedal entgegenwirkende hydraulische Reaktionskraft (Gegenkraft) noch relativ gering da sie erst durch den Druckanstieg in der Bremsanlage erzeugt wird. Somit erhöht der Fahrer zu Beginn eines Bremsvorganges ohne weiteres die Betätigungsgeschwindigkeit. Im Verlaufe des weiteren Pedalweges verstärkt sich aber sehr schnell die Reaktionskraft und deshalb kann bei einer Vielzahl von Fahrern beobachtet werden, daß bei Panikbremsungen die Pedalgeschwindigkeit nach einem Maximum wieder relativ schnell abfällt. Bei einem solchen Verlauf der Pedalbetätigung wird in aller Regel Bremsweg verschenkt.

Der Erfindung liegt die Aufgabe zugrunde, mit einfachen Mitteln bei einem Bremskraftverstärkersystem zum Regeln des Bremsdrucks in einem mit einem elektronisch einstellbaren Bremskraftverstärker ausgerüsteten Fahrzeugbremsanlage den Bremskraftverstärker so einzustellen, daß bei Panikbremsungen eine möglichst optimale Bremswirkung erzielt wird.

Erfindungsgemäß wird diese Aufgabe durch die im Anspruch angegebenen Merkmale gelöst.

Es wird demnach ein als solches bekannter Bremskraftverstärker eingesetzt, der an den Fahrzeugbremsen Drücke erzeugt, die nicht mehr allein bestimmt sind durch die vom Fahrer des Fahrzeuges am Pedal erzeugte Kraft, sondern durch andere Kriterien, nämlich einen Vergleich der Kraftanstiegsgeschwindigkeit $F_v$ ped des Bremspedals mit einem Schwellwert $F_v$ max. Überschreitet die Kraftanstiegsgeschwindigkeit des Bremspedals einen Schwellwert $F_v$ max, so wird der Bremsvorgang automatisch ausgelöst und es wird ein Bremsdruck aufgebaut, der größer ist als derjenige, der sich allein aus der Stellung des Bremspedals ergeben würde.

Nachfolgend wird ein Ausführungsbeispiel der Erfindung anhand der schematischen Zeichnungen näher erläutert.

Fig. 1      zeigt ein Funktions-Blockschaltdiagramm einer Bremsanlage, mit der das erfindungsgemäße Verfahren zum Regeln des Bremsdruckes durchführbar ist.

Fig. 2      zeigt einen Kraftsensor in einer teilweise geschnittenen Draufsicht.

Fig. 2a      zeigt den Kraftsensor gemäß Fig. 2 in einer seitlichen Schnittdarstellung, geschnitten längs der Linie A-A in Fig. 2.

Fig. 3      zeigt die Bremsanlage aus Fig. 1, bei der der Bremskraftverstärker detaillierter veranschaulicht ist.

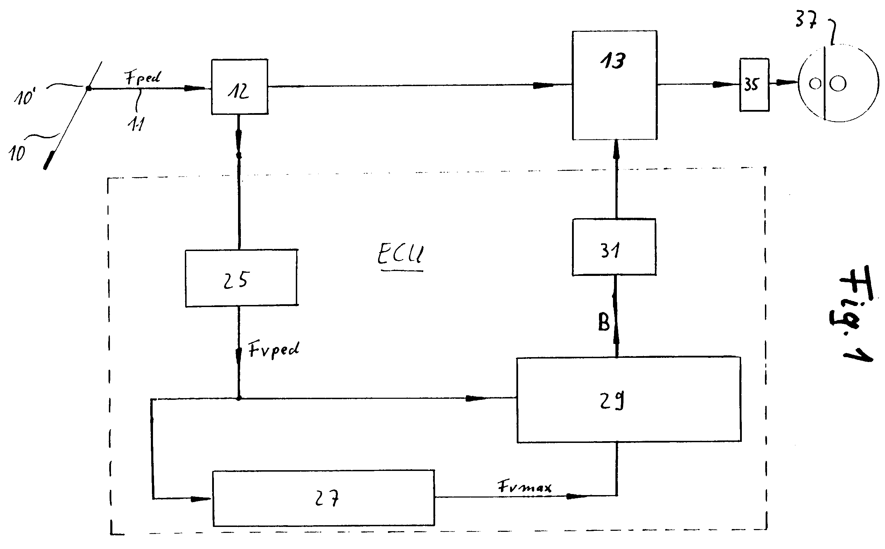

Ein Bremspedal 10 (siehe Fig. 1) wird von einem Fahrer betätigt, d.h. um das Lager 10' gedreht. Ein stangenförmiges Betätigungsglied 11 führt von dem Bremspedal 10 zu einem Kraftsensor 12, mit dem die Kraft am Pedal 10 gemessen wird.

Vorzugsweise ist der Kraftsensor 12 zwischen dem Bremspedal 10 bzw. dessen Betätigungsstange und einem Bremskraftverstärker 13 angeordnet, um die von einem Fahrer auf das Bremspedal 10 ausgeübten Betätigungskräfte zu erfassen.

Dabei ist entscheidend, daß der Kraftsensor 12 an einer Stelle angeordnet ist, an der die gemessene Kraft (und deren zeitlicher Verlauf) noch möglichst genau mit der Kraft direkt am Pedal 10 übereinstimmt. Das heißt, daß eine mehrfache Umlenkung, Übersetzung etc. der Kraft vor ihrer Messung zu vermeiden ist.

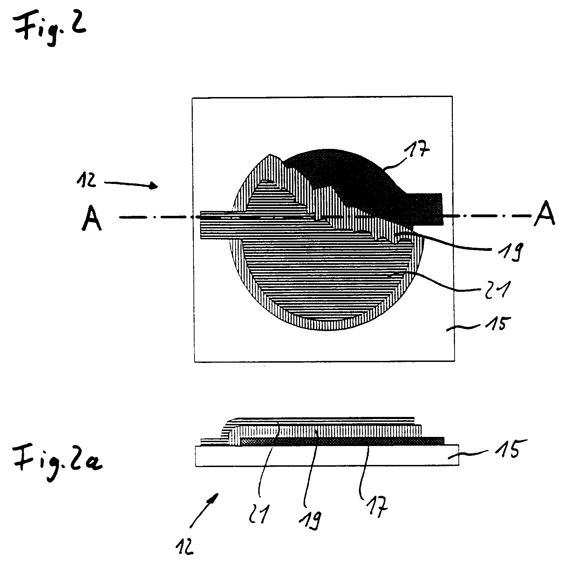

Als Kraftsensor ist z.B. ein in den Fig. 2, 2a veranschaulichter Sensor 12 mit folgendem Aufbau einsetzbar:

Auf einem Substrat 15 ist eine erste elektrische Kontaktschicht 17 angeordnet, darüber ist eine elektrische Widerstandsschicht angeordnet, die die erste elektrische Kontaktschicht 17 vollständig überdeckt. Weiterhin ist eine zweite elektrische Kontaktschicht 21 vorgesehen, die auf der elektrischen Widerstandsschicht 19 angeordnet ist, wobei die Flächenabmessungen der zweiten elektrischen Kontaktschicht 21 nicht größer sind als die der ersten elektrischen Kontaktschicht 17. Dabei ist die zweite elektrische Kontaktschicht 21 über der ersten elektrischen Kontaktschicht 17 ausgerichtet angeordnet.

Ein derartiger Kraftsensor ist im Detail in der vorangemeldeten, nachveröffentlichten P 43 00 995.6 der Anmelderin beschrieben.

Der zeitliche Verlauf der Kraft F ped am Pedal 10 wird anschließend in einer Recheneinheit 25 nach der Zeit abgeleitet (differenziert), um den Kraftanstieg am Pedal pro Zeiteinheit (Fv ped) zu ermitteln.

Nachfolgend wird der Einfachheit halber der Kraftanstieg pro Zeiteinheit nur noch als die Kraftanstiegsgeschwindigkeit Fv ped am Pedal 10 angesprochen.

Die in der Recheneinheit 25 ermittelte Kraftanstiegsgeschwindigkeit Fv ped wird dann weiter verarbeitet, um Signale zur Einstellung des Bremskraftverstärkers 13 zu gewinnen. Hierzu wird fortlaufend (kontinuierlich) in sehr kleinen Zeitinkrementen jeweils die momentane Kraftanstiegsgeschwindigkeit Fv ped am Bremspedal ermittelt und jede momentane Kraftanstiegsgeschwindigkeit Fv ped wird mit einem Schwellwert Fv max verglichen.

Die Schwellwerte Fv max sind zuvor abgespeichert und für die Bremsanlage vorgegeben (was nicht bedeutet, daß sie unabänderlich wären, jedoch sind sie für einen bestimmten Bremsvorgang fest vorgegeben).

In sehr kleinen Zeitinkrementen von z.B. wenigen Millisekunden (2 bis 10 ms) wird der jeweils geltende Wert der Kraftanstiegsgeschwindigkeit Fv ped am Pedal 10 in der oben beschriebenen Weise ermittelt und für jedes dieser Zeitinkremente wird dann dem jeweils momentan gemessenen Wert der Kraftanstiegsgeschwindigkeit Fv ped ein Schwellwert Fv max zugeordnet, der zuvor in einem Speicher 27 für das jeweilige Fahrzeug abgespeichert worden ist.

Alternativ kann jedem momentanen Wert der Kraftanstiegsgeschwindigkeit Fv ped auch durch einen Algorithmus ein Schwellwert Fv max zugeordnet werden, d.h. bei dieser Variante würde das Bezugszeichen 27 in Fig.

1 eine Rechenroutine bezeichnen, mit der in Zeitabschnitten im Millisekundenbereich ab Beginn des Bremsvorganges für die jeweilige Kraftanstiegsgeschwindigkeit Fv ped ein Schwellwert Fv max errechnet wird. Diese mathematische Ermittlung des Schwellwertes Fv max kann entweder linear ($Fv\ max = a \cdot t + b; a, b = const.$) oder gemäß einer Funktion des Schwellwerts Fv max in Abhängigkeit von der seit dem Beginn des Bremsvorganges verstrichenen Zeit, bei der die Zeit t potenziert wird, und zwar mit einem Exponenten größer als 1 ($Fv\ max = d \cdot t^{c} + e; c>1, e, d = const.$).

Der Beginn der Zeit t wird entweder aus einem Signal ermittelt, das vom Bremslichtsignalgeber abgeleitet wird, oder (siehe Fig. 1) aus einer Änderung der Pedalgeschwindigkeit (Fv ped > 0). Eine weitere Möglichkeit besteht darin, die Kraftanstiegsgeschwindigkeit in einzelne Abschnitte (Zeitfenster) einzuteilen und innerhalb dieser Abschnitte charakteristische Größen zu ermitteln, um diese zum Vergleich mit einem Schwellwert Fv max aus einem Kennfeld oder einem formelmäßig errechneten Wert zu vergleichen.

Dies bedeutet, daß fortlaufend für jedes Zeitinkrement aus der Kraftanstiegsgeschwindigkeit Fv ped jeweils ein zugeordneter Schwellwert Fv max festgelegt wird, der einem Vergleicher 29 zugeführt wird.

Im Vergleicher 28 werden der ermittelte Schwellwert Fv max und der Istwert der Kraftanstiegsgeschwindigkeit Fv ped miteinander verglichen, und ein vom Vergleichsergebnis abhängiges Ausgangssignal B wird einer Bremskraftverstärkersteuerung 31 zugeführt. Die Bremskraftverstärkersteuerung 31 steuert dann einen Bremskraftverstärker 13, der in bekannter Weise zwischen dem Pedal 10 und einem Hauptbremszylinder 35 angeordnet ist. Dem Hauptbremszylinder 35 ist in üblicher Weise eine Bremse 37 nachgeordnet. Die Bremskraftverstärkersteuerung 31 betätigt beispielsweise ein besonderes, elektromagnetisch betätigbares Ventil des Bremskraftverstärkers 13 derart, daß in Abhängigkeit von dem Ergebnis des Vergleichers 29, der vom Bremskraftverstärker 13 erzeugte Hydraulikdruck in der Bremse 37 vergrößert wird.

Ergibt der Vergleich zwischen dem Schwellwert Fv max und dem Istwert der Kraftanstiegsgeschwindigkeit Fv ped, daß der Istwert Fv ped größer ist als der Schwellwert Fv max, dann erzeugt die Bremskraftverstärkersteuerung 31 ein Signal, durch das die bremskraftverstärkende Wirkung des Bremskraftverstärkers 13 erhöht wird. Ergibt der Vergleich hingegen, daß der Istwert Fv ped kleiner ist als der Schwellwert Fv max, dann erfolgt keine Einstellung des Bremskraftverstärkers 13.

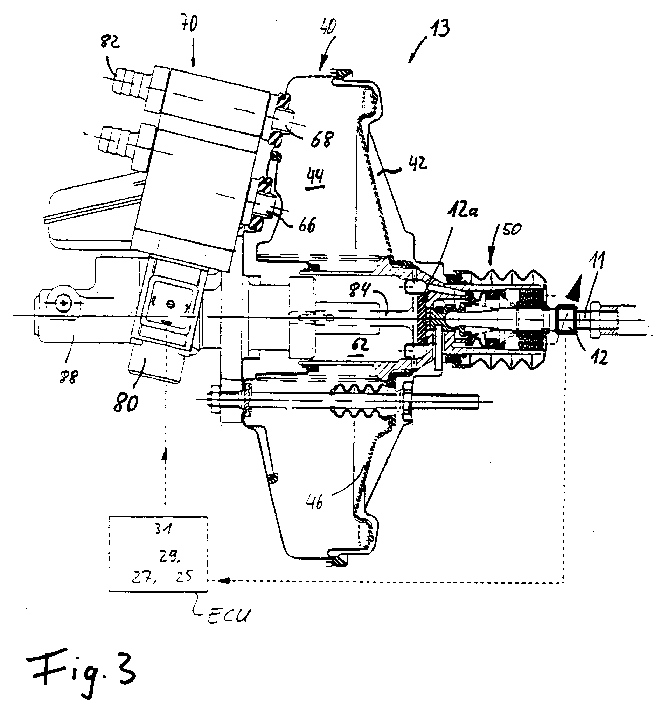

In Fig. 3 ist eine Bremsanlage mit einem Bremskraftverstärker im Detail veranschaulicht, der gemäß der Erfindung mit der Vorrichtung zum Regeln des Bremsdruckes verschaltet ist.

Der dargestellte Bremskraftverstärker 13 hat ein im wesentlichen rotationssymmetrisches Gehäuse 40, in dem eine hintere Kammer 42 sowie eine vordere Kammer 44 angeordnet und durch eine bewegliche Wand 46 voneinander getrennt sind. Zum Bremskraftverstärker gehört ein erstes steuerbares Ventil 50, das mit der beweglichen Wand 46 zu gemeinsamer Relativbewegung in bezug auf das Gehäuse 40 verbunden ist. Auf das Ventil 50 wirkt das vordere Ende des stangenförmigen Betätigungsgliedes 11, das im Einbauzustand mit dem Bremspedal 10 eines Kraftfahrzeuges verbunden ist.

Die hintere Kammer 42 ist durch ein Rückschlagventil mit einem abgegrenzten zentralen Raum 62 des Bremskraftverstärkers 33 derart verbunden, daß Luft aus diesem Raum 62 in die hintere Kammer 42 strömen kann, jedoch nicht umgekehrt. Der zentrale Raum 62 ist ferner mit einer im Gehäuse 40 ausgebildeten Anschlußöffnung 66 zum Einleiten von Luft verbunden. Der vorderen Kammer 44 ist eine ebenfalls im Gehäuse 40 ausgebildete Anschlußöffnung 68 zum Absaugen von Luft zugeordnet.

An die beiden Öffnungen 66 und 68 ist ein zweites steuerbares Ventil 70 angeschlossen, das im dargestellten Beispiel unmittelbar an der Vorderseite des Bremskraftverstärkergehäuses 40 angeordnet und ähnlich wie das erste steuerbare Ventil 50 gestaltet ist. Das zweite Ventil 70 ist so von einem Elektromagneten 80 gesteuert, daß im Ruhezustand des Ventils 70 die vordere Kammer 44 mit dem zentralen Raum 62 verbunden ist. An dem zweiten Ventil 70 ist weiterhin ein Vakuumanschluß 82 vorgesehen, der in ständiger Verbindung mit dem Stutzen 68, also auch mit der vorderen Kammer 14, steht und sich an eine Vakuumquelle, beispielsweise eine Ansaugleitung eines Verbrennungsmotors, anschließen läßt.

Innerhalb des zentralen Raums 42 des Bremskraftverstärkers ist ein Kraftabgabeglied 84 angeordnet, das sich an dem ersten steuerbaren Ventil 50 abstützt. Das Kraftabgabeglied 84 ist zur Betätigung des Hauptbremszylinders 35 vorgesehen.

In dem abgebildeten Ruhezustand, bei abgeschalteter Vakuumquelle, herrscht in beiden Kammern 42 und 44 Atmosphärendruck. Bei eingeschalteter Vakuumquelle, also beispielsweise bei laufendem Motor, mit dessen Ansaugrohr der Vakuumanschluß 82 verbunden ist, entsteht in der vorderen Kammer 44 ein Unterdruck, so daß die bewegliche Wand 46, und mit ihr das Ventil 50, geringfügig nach vorne verschoben wird, wodurch sich ein erneutes Druckgleichgewicht zwischen den beiden Kammern 42 und 44 einstellt. Von dieser Bereitschaftsstellung aus ist eine verlustwegfreie Betätigung des Bremskraftverstärkers gewährleistet.

Bei einer normalen Bremsbetätigung durch den Fahrer arbeitet der Bremskraftverstärker in überlicher Weise, indem die Verbindung zwischen den beiden Kammern 42 und 44 über das erste steuerbare Ventil 50 unterbrochen wird und Umgebungsluft in die hintere Kammer 42 strömt. Infolgedessen steht nun eine durch den Bremskraftverstärker verstärkte Betätigungskraft am Kraftabgabeglied 84 zur Verfügung. Dies gilt auch dann, wenn der Elektromagnet 60 stromlos und somit das zweite steuerbare Ventil 70 in seiner Ruhestellung geblieben ist, so daß im zentralen Raum 62 weiterhin - ebenso wie in der vorderen Kammer 44 - Unterdruck herrscht.

Bei einer vom Fahrer hervorgerufenen besonders raschen Vorwärtsbewegung des Betätigungsgliedes 11 gibt der an dem Betätigungsglied 11 angeordnete Kraftsensor 12 ein Signal an einen Rechner ECU ab, der dafür sorgt, daß der Elektromagnet 80 erregt und das zweite Ventil 70 betätigt wird, so daß die beiden Anschlußstutzen 66 und 68 voneinander getrennt werden und Umgebungsluft durch den Anschlußstutzen 66 in den zentralen Raum 62 und in die hintere Kammer 42 strömt.

In jedem Fall bewirkt die durch das zweite steuerbare Ventil 70 und weiter durch den zentralen Raum 62 in die hintere Kammer 42 eingeleitete Luft eine rasche Vorwärtsbewegung der beweglichen Wand 46 samt Ventilgehäuse 40.

Alternativ zu der gezeigten Position des als Dehnungsmesstreifen ausgebildeten Kraftsensors 12 an dem Betätigungsglied 30 kann auch der in den Fig. 2, 2a veranschaulichte Kraftsensor verwendet werden, der beispielsweise an der mit 12 a bezeichneten Stelle am vorderen Ende des Betätigungsglieds 11 an einer Gummiplatte angebracht sein, die als hydaulische Übersetzung wirkt.

Mit dem vorstehend beschriebenen Verfahren und der dieses Verfahren durchführenden Vorrichtung wird insbesondere bei sehr plötzlichen und heftigen Bremsungen in Gefahrensituationen ein günstiger Bremsdruckaufbau an der Bremse 37 erzielt, durch den in der Praxis häufig vorkommende Fahrerfehler (die zu einem zu geringen Bremsdruck führen) überwunden werden. Dies geschieht dadurch, daß aufgrund der den einzelnen Kraftanstiegsgeschwindigkeiten Fv ped am Bremspedal zugeordneten Schwellwerten Fv max eine höhere Bremskraftverstärkung mit dem Bremskraftverstärker 13 eingestellt wird als bei herkömmlichen Bremsungen.

Hierdurch beschleunigt sich nicht nur der Bremsdruckaufbau, sondern es wird auch ein höheres Bremsdruckniveau erzielt. Ein zu hohes Bremsdruckniveau wird in herkömmlicher Weise durch eine ABS-Anlage vermieden.

**Patentansprüche**

1. Bremskraftverstärkersystem zum Regeln des Bremsdruckes in einer mit einem elektronisch einstellbaren Bremskraftverstärker (13) ausgerüsteten Fahrzeugbremsanlage,
dadurch **gekennzeichnet,** daß
ein Sensor (12) zum Erfassen einer auf ein Bremspedal (10) wirkenden Bremskraft (F ped), und eine ein Ausgangssignal (Fv ped) bereitstellende Differenziereinrichtung (14) zum Differenzieren der Bremskraft (F ped) vorgesehen sind, um eine Kraftanstiegsgeschwindigkeit (Fv ped) des Bremspedals zu ermitteln und in Abhängigkeit davon eine Bremskraftverstärkung in der Weise durchzuführen, daß während einer Bremsung fortlaufend jeweils einer momentanen Kraftanstiegsgeschwindigkeit (Fv ped) des Bremspedals (10) ein Schwellwert (Fv max) zugeordnet wird, der momentane Istwert der Kraftanstiegsgeschwindigkeit (Fv ped) mit dem jeweiligen Schwellwert (Fv max) in einer Vergleichseinrichtung (29) verglichen wird, und ein Ausgangssignal (B) der Vergleichseinrichtung (29) zur Einstellung des Bremskraftverstärkers (13) dient.

## Claims

1. A brake pressure boosting system for control of the brake pressure in a motor vehicle brake system equipped with an electronically adjustable brake pressure booster (13),
**characterized** in that a sensor (12) is provided to detect a braking force (F ped) which acts on a brake pedal (10) and a differentiator means (14) generating an output signal (Fv ped) is provided to differentiate the braking force (F ped) so as to detect a force increase gradient (Fv ped) at the brake pedal and in response thereto boost the brake pressure in such manner that, during a braking operation, respective threshold values (Fv max) are associated successively with respective instantaneous force increase gradients (Fv ped) at the brake pedal (10), each instantaneous actual value of the force increase gradient (Fv ped) is compared in a comparator means (29) with the corresponding threshold value (Fv max), and an output signal (B) of the comparator means (29) serves to control the brake pressure booster (13).

## Revendications

1. Système d'assistance de freinage pour régler la pression de freinage dans un système de freinage de véhicule équipé d'un freinage assisté réglable électroniquement,
caractérisé en ce que
un capteur (12) servant à relever une force de freinage (F ped) agissant sur une pédale de frein (10) et un dispositif différentiateur (14) servant à différentier la force de freinage (F ped) et générant un signal de sortie (Fv ped) sont prévus pour déterminer une vitesse d'augmentation de force (Fv ped) de la pédale de frein et en fonction de cela mettre en oeuvre une assistance au freinage en attribuant en continu pendant un freinage une valeur de seuil (Fv max) à chaque vitesse d'augmentation de force (Fv ped) instantanée de la pédale de frein (10), en comparant la valeur effective instantanée de la vitesse d'augmentation de force (Fv ped) à la valeur de seuil correspondante (Fv max) dans un comparateur (29) et en se servant d'un signal de sortie (B) du comparateur (29) pour le réglage du freinage assisté (13).

Fig.1

EP 0 616 932 B1

Fig. 2

12 →

A

17

19

21

15

Fig. 2a

15

12

21   19   17

Fig. 3